# EUROPÄISCHE PATENTSCHRIFT

(11) **EP 0 679 545 B1**
(45) Veröffentlichungstag und Bekanntmachung des Hinweises auf die Patenterteilung: **23.07.1997**
(21) Anmeldenummer: 95103105.3
(22) Anmeldetag: 04.03.1995
(51) Int. Cl.: B60H 1/00, B60H 1/22

(54) **Vorrichtung und Verfahren zum Heizen eines Fahrgastraums in einem Kraftfahrzeug**
Means and method for heating a passenger compartment in a motor car
Dispositif et procédé pour chauffer l'espace destiné aux passagers dans un véhicule à moteur

(30) Priorität: 27.04.1994 DE 4414595
(43) Veröffentlichungstag der Anmeldung: 02.11.1995
(73) Patentinhaber: Behr GmbH & Co., D-70469 Stuttgart (DE)
(72) Erfinder: Khelifa, Noureddine, Dr., D-70180 Stuttgart (DE)
(74) Vertreter: Wasmuth, Rolf, Dipl.-Ing.

(56) Entgegenhaltungen:
- DE-A- 4 133 917
- DE-A- 4 221 242

## Beschreibung

Die Erfindung betrifft eine Vorrichtung und ein Verfahren zum Heizen eines Fahrgastraums in einem Kraftfahrzeug nach dem Oberbegriff des Anspruchs 1.

Eine derartige Vorrichtung zum Heizen eines Fahrgastraums ist aus der DE 41 33 917 A1 bekannt. Um eine ausreichende Wärmeenergie bereits bei Fahrantritt zur Verfügung zu stellen, sind wechselweise betriebene Sorptionsreaktoren vorgesehen, die zur Erzielung einer ausreichenden Heizleistung mit entsprechendem Volumen auszulegen sind. Aufgrund des benötigten großen Bauraums sind derartige, zufriedenstellend arbeitende Vorrichtungen nur in größeren Fahrzeugen einsetzbar. Die gleich bei Beginn der Fahrt zur Verfügung stehende Heizenergie ist ausreichend, ein Beschlagen der Fahrzeugscheiben zu vermeiden, so daß aufgrund von Sichtbehinderungen mögliche gefährliche Verkehrssituationen ausgeschlossen werden können.

Der Erfindung liegt die Aufgabe zugrunde, eine Vorrichtung zum Heizen eines Fahrgastraums in einem Kraftfahrzeug nach dem Oberbegriff des Anspruchs 1 derart weiterzubilden, daß auch mit einer kleinen, nur einen geringen Bauraum benötigenden Menge an Sorbens ein wirksamer Schutz gegen beschlagene Fahrzeugscheiben gegeben ist.

Die Aufgabe wird nach den kennzeichnenden Merkmalen des Anspruchs 1 gelöst.

Der Erfindung liegt der Kerngedanke zugrunde, den Sorptionsreaktor ausschließlich zur Entfeuchtung der Luft einzusetzen. Deshalb kann die Menge des Sorbens bis auf ein Minimum gesenkt werden, welches bis zum Erreichen einer vorgegebenen Luftaustrittstemperatur am Wärmetauscher eine Trocknung des Luftstroms gewährleistet. Dieser dem Fahrgastraum unmittelbar zugeführte Luftstrom wird in einem ununterbrochenen Adsorptionsvorgang getrocknet, wodurch ein Beschlagen der Scheiben wirksam verhindert ist.

Bevorzugt sind der Sorptionsreaktor, die den Luftstrom zu- und abführenden Luftführungskanäle und die Luftstromsteuerelemente als eine Trocknereinheit ausgebildet, welche ohne großen technischen Aufwand an eine bestehende Fahrzeugheizung bzw. eine bestehende Fahrzeugklimaanlage angeflanscht werden kann.

In einer bevorzugten Ausführungsform der Erfindung ist die Desorptionsheizung von dem Wärmetauscher zum Aufwärmen eines dem Fahrgastraum zugeführten Heizluftstroms gebildet.

Wird in dem Sorbens eine Heizvorrichtung angeordnet, so kann der benötigte Bauraum für die Trocknereinheit weiter gesenkt werden.

Nach einem bevorzugten Verfahren zum Heizen eines Fahrgastraums wird bei Inbetriebnahme des Wärmetauschers im wesentlichen der gesamte Umluftstrom vor Eintritt in den Fahrgastraum als Adsorptionsluftstrom durch den Sorptionsreaktor geführt und mit zunehmender Heizleistung des Wärmetauschers der durch den Sorptionsreaktor geführte Adsorptionsluftstrom reduziert. Dabei kann die Anordnung so getroffen sein, daß der Adsorptionsluftstrom mit zunehmender Heizleistung übergangslos in einen Desorptionsluftstrom übergeht. Es kann dabei zweckmäßig sein, zumindest einen Teil des Desorptionsluftstroms dem Fahrgastraum zuzuführen.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: in schematischer Darstellung eine Vorrichtung zum Heizen einer Kabine mit einem Sorptionsreaktor,
- Fig. 2: in schematischer Darstellung eine der Fig. 1 ähnliche Vorrichtung in einer Adsorptionsphase,
- Fig. 3: in schematischer Darstellung die Vorrichtung nach Fig. 2 in einer Desorptionsphase,
- Fig. 4: in schematischer Darstellung ein anderes Ausführungsbeispiel einer erfindungsgemäßen Vorrichtung zum Heizen eines Fahrgastraums in einem Kraftfahrzeug,
- Fig. 5: in schematischer Darstellung eine Vorrichtung mit einer in dem Sorptionsreaktor integrierten Heizvorrichtung,
- Fig. 6: in schematischer Darstellung ein weiteres Ausführungsbeispiel der erfindungsgemäßen Vorrichtung,
- Fig. 7: in schematischer Darstellung eine erfindungsgemäße Vorrichtung mit einer gemeinsamen Heizvorrichtung für den dem Fahrgastraum zugeführten Luftstrom und den Desorptionsluftstrom,
- Fig. 8: in schematischer Darstellung die Vorrichtung nach Fig. 7 in der Desorptionsphase,
- Fig. 9: eine zylindrische Baueinheit aus einem Wärmeübertrager und einem Sorptionsreaktor zur adiabatischen Adsorption bzw. Desorption,
- Fig. 10: eine Baueinheit aus einem quaderförmigen Sorptionsreaktor mit innenliegendem Wärmetauscher zur adiabatischen Adsorption bzw. Desorption,
- Fig. 11: einen zylindrischen Sorptionsreaktor mit im Sorbens angeordneter Heizvorrichtung zur isothermen Adsorption bzw. Desorption,
- Fig. 12: einen quaderförmigen Sorptionsreaktor mit im Sorbens eingebetteter Heizvorrichtung zur isothermen Adsorption bzw. Desorption,
- Fig. 13: in schematischer Darstellung eine perspektivische Ansicht eines Luftführungsgehäuses für einen adiabatischen Betrieb,
- Fig. 14: in schematischer Darstellung ein Luftführungsgehäuse für einen adiabatischen Betrieb.

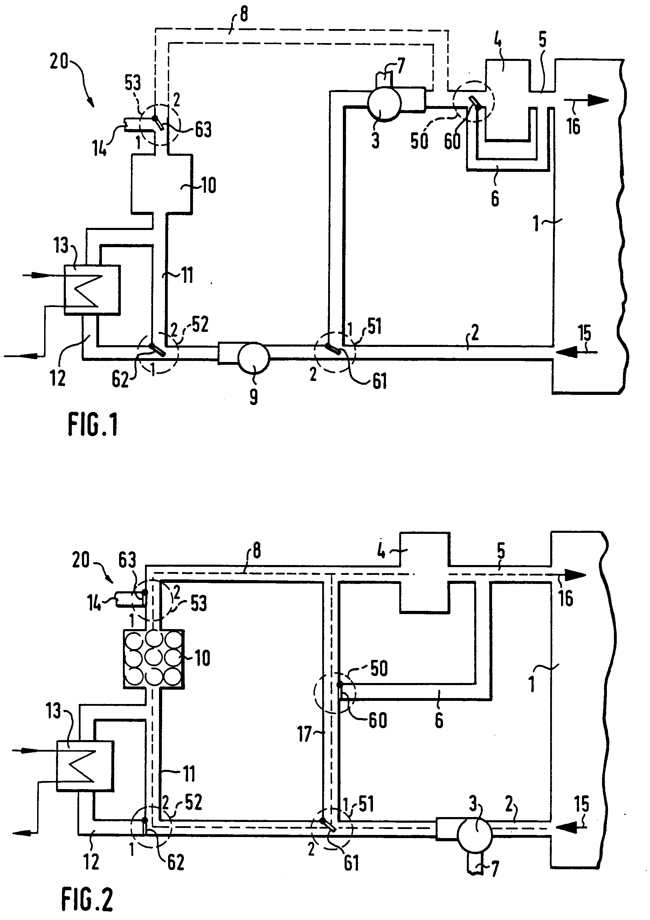

Die in Fig. 1 schematisch dargestellte Vorrichtung zum Heizen eines Fahrgastraums 1 besteht im wesentlichen aus einem Abluftkanal 2, über den aus dem Fahrgastraum 1 in Pfeilrichtung 15 Umluft abgezogen wird. Die Umluft wird von einem Gebläse 3 einer Heizvorrichtung 4 zugeführt, welche bevorzugt ein Wärmetauscher ist. Die aus dem Wärmetauscher 4 austretende Luft wird über den Zuluftkanal 5 dem Fahrgastraum 1 in Pfeilrichtung 16 als aufgeheizter Luftstrom zugeführt.

Der Wärmetauscher 4 ist bevorzugt von der Abwärme eines den Fahrgastraum 1 aufweisenden Kraftfahrzeugs gespeist, so z. B. primärseitig vom Abgasstrom eines Verbrennungsmotors beaufschlagt oder primärseitig mit dem Kühlmittelkreislauf des Verbrennungsmotors verbunden. Der Wärmetauscher 4 ist von einem nach Art eines Bypasses geschalteten Luftführungskanals 6 umgehbar, wobei stromauf des Wärmetauschers 4 ein Luftstromsteuerelement 50 mit einer Steuerklappe 60 angeordnet ist. Je nach Stellung der Steuerklappe 60 ist der Umluftstrom auf den Wärmetauscher 4 und den Bypasskanal 6 aufteilbar. Über einen Frischluftkanal 7, der bevorzugt am Gebläse 3 angeschlossen ist, kann dem Umluftstrom Frischluft zugemischt werden.

An diese Vorrichtung zum Heizen eines Fahrgastraums 1 ist eine Trocknungseinheit 20 geschaltet, welche im wesentlichen aus einem Sorptionsreaktor 10 besteht, der mit einem Sorbens, wie Zeolith oder dgl. gefüllt ist. Ausgangsseitig ist der Sorptionsreaktor mit einem Anschlußkanal 8 stromauf des Wärmetauschers vor dem Luftstromsteuerelement 50 mit dem Zuluftkanal 5 verbunden; eingangsseitig steht der Sorptionsreaktor 10 über einen Luftführungskanal 11 und ein Luftstromsteuerelement 51 mit einer Steuerklappe 61 mit dem Abluftkanal 2 des Fahrgastraums 1 in Verbindung. Im Luftführungskanal 11 ist zwischen dem Lufstromsteuerelement 51 und dem Sorptionsreaktor 10 ein Gebläse 9 angeordnet.

Stromab des Gebläses 9 und stromauf des Sorptionsreaktors 10 ist zu einem Abschnitt des Luftführungskanals 11 ein Parallelkanal 12 mit einer Desorptionsheizung 13 angeordnet. Der Parallelkanal 12 ist über ein Luftstromsteuerelement 52 mit einer Steuerklappe 62 an den Luftführungskanal 11 angeschlossen.

Die Desorptionsheizung 13 besteht bevorzugt aus einem Wärmetauscher, welcher - wie schon zum Wärmetauscher 4 beschrieben - insbesondere von der Abwärme des das Kraftfahrzeug antreibenden Verbrennungsmotors gespeist ist.

Stromab des Sorptionsreaktors ist über ein Luftstromsteuerelement 53 ein Fortluftkanal 14 mit dem Anschlußkanal 8 verbunden.

Beim Start des das Fahrzeug antreibenden Verbrennungsmotors steht nicht genügend Abwärme zum Betrieb der Fahrzeugheizung 4 bzw. der Desorptionsheizung 13 zur Verfügung. Insbesondere bei niedrigen Temperaturen tritt daher im Fahrgastraum 1 ein Beschlagen der Fahrzeugscheiben auf. Um dies zu vermeiden, werden mit dem Start des Verbrennungsmotors die Steuerklappen 61, 62 und 63 der Luftstromsteuerelemente 51 bis 53 in die Stellung 1 geschaltet. Der gesamte in Pfeilrichtung 15 abgesaugte Umluftstrom wird über den Sorbensreaktor 10 geführt und als getrockneter Luftstrom über den Zuluftkanal 5 in den Fahrgastraum 1 zurückgeleitet. Die Luftfeuchtigkeit im Fahrgastraum wird rasch gesenkt, so daß die Gefahr eines Beschlagens der Fahrzeugscheiben gering ist. Nach Start des Verbrennungsmotors ist daher auch ohne Heizleistung die Senkung der Luftfeuchtigkeit im Fahrgastraum 1 möglich. Steht genügend Abwärme zur Verfügung, ist der dem Fahrgastraum 16 zugeführte Luftstrom entsprechend aufgewärmt, wodurch ein Beschlagen der Fahrzeugscheiben vermieden ist.

Die im Sorptionsreaktor angeordnete Sorbensmasse ist so gewählt, daß dessen Speicherfähigkeit für die dem Luftstrom zu entziehende Feuchtigkeit derart gewählt ist, daß bis zum Erreichen einer vorgebbaren Luftaustrittstemperatur stromab des Wärmetauschers 4 eine ausreichende Trocknung des Luftstroms in einem ununterbrochenen Adsorptionsvorgang möglich ist. Sobald Heizleistung zur Verfügung steht, wird der Sorbensreaktor 10 zur Trocknung des Luftstroms zwingend nur noch bedingt bzw. nicht mehr benötigt. Das Sorbens ist bis zur Grenze der Speicherfähigkeit belastet und muß desorbiert werden. Hierzu werden die Luftstromsteuerelemente 52 und 53 in eine Zwischenstellung bewegt oder umgeschaltet, so daß die Steuerklappen 62 und 63 in Stellung 2 stehen. Der über das Gebläse 9 zugeführte Luftstrom durchströmt die Desorptionsheizung 13, so daß der in den Sorptionsreaktor 10 eintretende aufgeheizte Luftstrom die im Sorbens gespeicherte Feuchtigkeit austreibt. Der feuchtwarme Luftstrom wird über den Fortluftkanal 14 in die Umgebung abgegeben. Im Ausführungsbeispiel nach Fig. 1 ist die Strömungsrichtung von Desorptionsluftstrom und Adsorptionsluftstrom gleich.

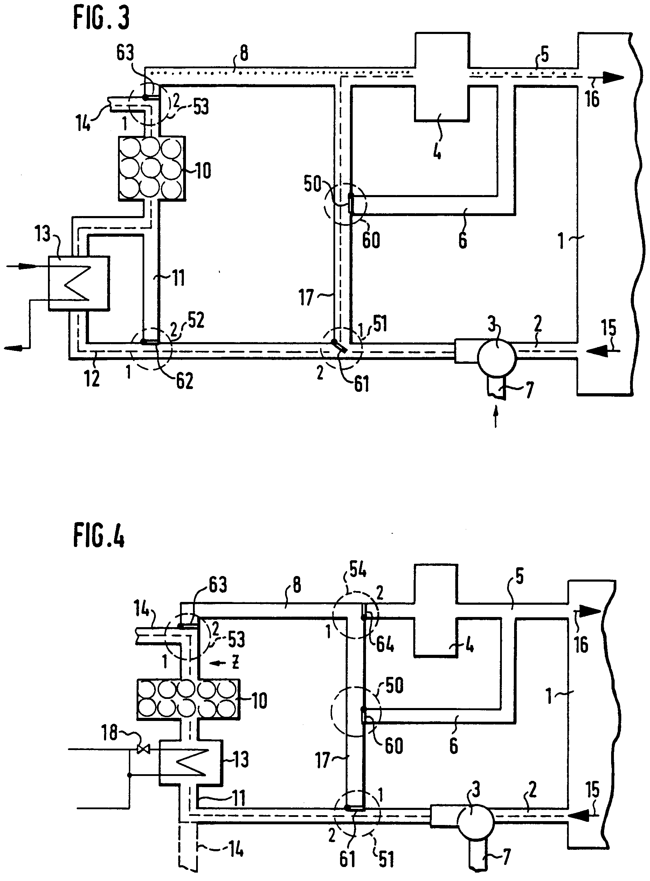

Die in den Fig. 2 und 3 dargestellten schematischen Schaltbilder einer Vorrichtung zum Heizen eines Fahrgastraums 1 entsprechen im Grundaufbau dem nach Fig. 1, weshalb für gleiche Teile gleiche Bezugszeichen verwendet sind. Durch Anordnung des Gebläses 3 im Abluftkanal 2 kann das in der Trockeneinheit nach Fig. 1 angeordnete Gebläse 9 entfallen. Wie im Ausführungsbeispiel nach Fig. 1 ist der als Desorptionsheizung vorgesehene Wärmetauscher 13 primärseitig permanent von der Abwärme des Verbrennungsmotors gespeist, da der Wärmetauscher 13 über das Luftstromsteuerelement 52 in den Luftstrom ein- oder ausschaltbar ist.

Im Ausführungsbeispiel nach Fig. 2 ist der Betriebszustand in der Anwärmphase des Verbrennungsmotors dargestellt. Mit Start des Verbrennungsmotors liegt die Steuerklappe 51 des Luftstromsteuerelementes 51 in der Stellung 1, so daß - entsprechend der eingezeichneten Stellung der anderen Lufstromsteuerelemente - der gesamte vom Gebläse 3 geförderte Luftstrom über den Sorptionsreaktor 10 geführt ist und als getrockneter Luftstrom über den Zuluftkanal 5 dem Fahrgastraum 1 in Pfeilrichtung 16 zugeführt ist. Der von der Abwärme des Verbrennungsmotors gespeiste Wärmetauscher 4 baut mit zunehmender Betriebszeit des Verbrennungsmotors seine Heizleistung auf, wobei proportional oder stufenweise entsprechend der zunehmenden Heizleistung des Wärmetauschers 4 die Steuerklappe 61 des Luftstromsteuerelementes 51 in Richtung auf die Stellung 2 verschwenkt wird. In der in Fig. 2 gezeichneten Mittellage strömt nur noch ein Teil der vom Gebläse 3 geförderten Luft über den Sorptionsreaktor 10, ein anderer Teil strömt über einen Verbindungskanal 17 unmittelbar zum Wärmetauscher 4. Entsprechend der sinkenden Leistungsfähigkeit des Sorptionsreaktors 10 wird die Menge der zu trocknenden Luft reduziert, wobei die verminderte Leistung des Sorptionsreaktors 10 durch die steigende Heizleistung des Wärmetauschers 4 ausgeglichen werden kann. Da das Sorbens bei Aufnahme von Feuchtigkeit Wärme abgibt, stellt der Sorptionsreaktor 10 zu Beginn des Heizvorgangs auch eine gewisse Wärmeenergie zur Verfügung.

Wie Fig. 3 zeigt, ist durch Umschalten der Luftstromsteuerelemente 52 und 53 eine Desorption des Sorptionsreaktors 10 möglich. Die Steuerklappen 62 und 63 stehen hierzu in Stellung 2, so daß ein über die Steuerklappe 61 des Luftstromsteuerelementes 51 abgezweigter Teilluftstrom des vom Gebläse 3 geförderten Luftstroms über die Desorptionsheizung 13 aufgeheizt dem Sorptionsreaktor 10 zugeführt ist und die im Sorbens gespeicherte Feuchtigkeit austreibt. Der feuchtwarme Luftstrom kann über den Fortluftstutzen 14 abgeführt sein. Sofern zweckmäßig, kann ein Teil dieses feuchtwarmen Luftstroms durch entsprechende Stellung der Steuerklappe 53 dem Fahrgastraum 1 zugeführt werden, wie in Fig. 3 punktiert dargestellt.

Das Ausführungsbeispiel nach Fig. 4 entspricht im Grundaufbau dem nach den Fig. 2 und 3, weshalb für gleiche Teile gleiche Bezugszeichen verwendet sind. Die Desorptionsheizung 13 ist in Abweichung von den vorbeschriebenen Ausführungsbeispielen im Luftführungskanal 11 vorgesehen. Der den Luftstrom dem Sorptionsreaktor 10 zuführt. In Strömungsrichtung des Luftstroms gesehen, liegt die Desorptionsheizung 13 stromauf des Sorptionsreaktors 10, so daß Adsorptionsluftstrom und Desorptionsluftstrom gleiche Strömungsrichtung aufweisen. Die z. B. an den Kühlmittelkreislauf des Verbrennungsmotors angeschlossene Desorptionsheizung weist ein Ventil 18 auf, welches in der Adsorptionsphase geschlossen und in der Desorptionsphase offen ist. In Fig. 4 ist die Desorptionsphase dargestellt, bei der auch der Luftstrom des Gebläses 3 vollständig zur Desorption herangezogen werden kann. Der Luftstrom durchströmt den Wärmetauscher 13, tritt aufgeheizt in den Sorptionsreaktor 10 ein, treibt die Feuchtigkeit aus dem Sorbens aus und tritt über das in entsprechender Stellung geschaltete Lufstromsteuerelement 53 über den Fortluftstutzen 14 ins Freie aus.

Es kann zweckmäßig sein, die Desorptionsheizung 13 stromab des Sorptionsreaktors 10 an der Stelle Z anzuordnen; der Fortluftstutzen 14 ist dann auf der dem Wärmetauscher abgewandten Seite des Sorptionsreaktors 10 anzuordnen. Der Desorptionsluftstrom wird dann über das in Stellung 2 stehende Lufstromsteuerelement 51, den Verbindungskanal 17 und ein weiteres Luftstromsteuerelement 54 mit einer in Stellung 2 stehenden Steuerklappe 64 entgegen der Strömungsrichtung des Adsorptionsstroms über den an der Stelle Z angeordneten Wärmetauscher dem Sorptionsreaktor 10 zugeführt.

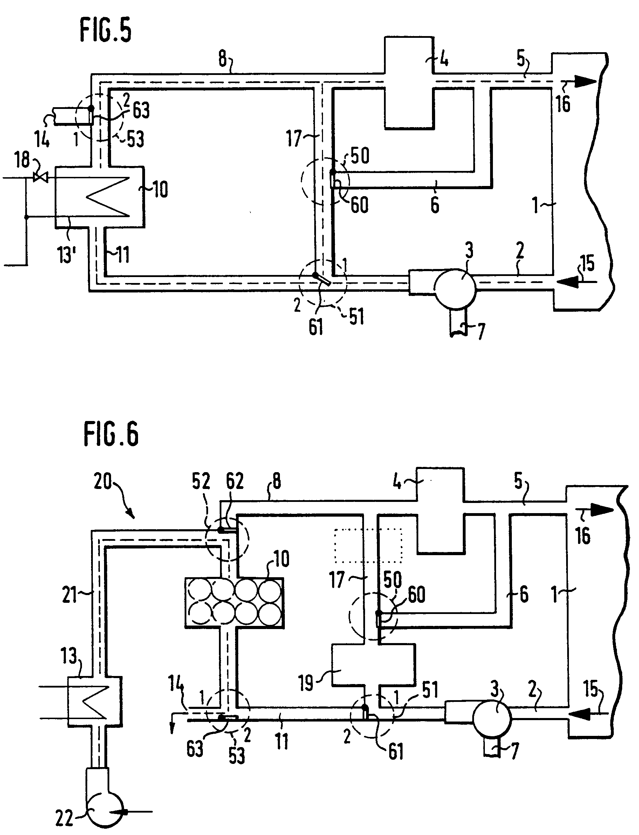

Im Ausführungsbeispiel nach Fig. 5 ist im Sorptionsreaktor 10 eine Heizvorrichtung 13' angeordnet, über die das Sorbens umittelbar aufgeheizt wird. Die Heizvorrichtung 13' kann zweckmäßig über ein Ventil 18 an den Kühlkreislauf des Verbrennungsmotor angeschlossen sein.

Bei geschlossenem Ventil 18 erfolgt eine adiabatische Adsorption; die bei der Feuchtigkeitsbindung frei werdende Reaktionswärme wird vom trockenen Adsorptionsluftstrom abgeführt. Ist das Ventil 18 geöffnet, so läuft eine isotherme Adsorption ab; die bei der Feuchtigkeitsbindung freiwerdende Reaktionswärme wird über das die Heizschlangen im Sorptionsreaktor 10 durchströmende Kühlwasser abgeführt, wobei sich vorteilhaft eine Kühlwasservorwärmung ergibt.

Vorteilhaft ist auch ein primärseitig vom Kühlwasserstrom beaufschlagter Wärmetauscher einsetzbar, dessen Sekundärseite mit einem Sorbens beschichtet ist. Ein derartiger Wärmetauscher ist vorteilhaft anstelle des Wärmetauschers der Fahrzeugheizung einsetzbar.

Im Ausführungsbeispiel nach Fig. 6 ist eine Trocknungseinheit 20 gezeigt, welche an eine Vorrichtung zum Heizen des Fahrgastraums 1 angeschlossen ist. Dabei kann - sofern das Fahrzeug mit einer Klimaanlage ausgerüstet ist - im Verbindungskanal 17 ein Verdampfer 19 angeordnet sein. Die im Zuluftkanal 5 angeordnete Heizvorrichtung 4 kann zweckmäßig ebenfalls im Verbindungskanal 17 vorgesehen sein, wie punktiert in Fig. 6 dargestellt. Der die Heizvorrichtung 4 umgehende Bypasskanal 6 zweigt dabei zwischen dem Verdampfer und der Heizvorrichtung 4 vom Verbindungskanal 17 zum Zuluftkanal 5 ab.

Parallel zu dem Verbindungskanal 17 ist der Sorptionsreaktor 10 angeordnet, welcher eingangsseitig wie ausgangsseitig je ein Luftstromsteuerelement 52 und 53 aufweist. Über das Luftstromsteuerelement 53 ist ein Fortluftkanal 14 angeschlossen; über das Luftstromsteuerelement 52 ist ein Desorptionskanal 21 angeschlossen, welcher von einem Gebläse 22 gespeist ist. Im Desorptionskanal 21 ist - in der bereits beschriebenen Ausbildung - eine Desorptionsheizung 13 angeordnet. Diese Ausführung hat den Vorteil, daß der Desorptionsluftstrom dem Adsorptionsluftstrom entgegengerichtet ist, wodurch sich eine energiesparende, rasche Desorption des Reaktors 10 ergibt.

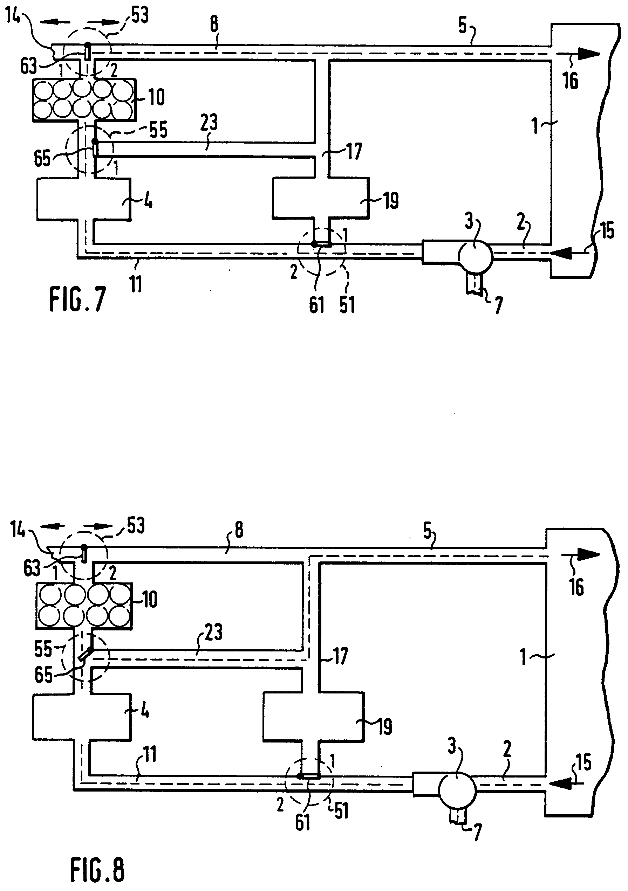

Im Ausführungsbeispiel nach den Fig. 7 und 8 ist die Heizvorrichtung für den Luftstrom stromauf des Sorptionsreaktors 10 angeordnet und bildet gleichzeitig die Desorptionsheizung. Im Verbindungskanal 17 kann der Verdampfer 19 einer Fahrzeugklimaanlage angeordnet sein, wobei der Verdampfer und der Wärmetauscher 4 stromab über einen Querkanal 23 miteinander verbunden sind.

In der Stellung 1 der Luftstromsteuerelemente 51 und 55 wird der in Pfeilrichtung 15 abgezogene Umluftstrom vollständig über den Sorptionsreaktor 10 geführt und über den Zuluftkanal 5 in Pfeilrichtung 16 in den Fahrgastraum 1 zurückgeleitet. Steht dem Wärmetauscher 4 Heizleistung zur Verfügung, kann die Steuerklappe 65 des Lufstromsteuerelementes 55 eine Zwischenstellung wie in Fig. 8 dargestellt einnehmen, so daß ein Teilstrom des vom Gebläse 3 geförderten Luftstroms über den Querkanal 23 unmittelbar in den Zuluftkanal 5 strömt und ein anderer Teilluftstrom über den Sorptionsreaktor 10 getrocknet dem Zuluftkanal 5 zugeführt ist. Bei anwachsender Heizleistung bedingt der in den Sorptionsreaktor 10 eintretende Luftstrom die Desorption des im Reaktor befindlichen Sorbens, weshalb die Steuerklappe 63 des Luftstromsteuerelementes 53 den austretenden Luftstrom als Fortlufstrom über den Fortluftstutzen 14 abführt. Es kann zweckmäßig sein, einen Teil des Desorptionsluftstroms als feuchtwarmen Luftstrom über den Zuluftkanal 5 dem Fahrgastraum zuzuführen, um eine zu trockene Luft im Fahrgastraum zu vermeiden.

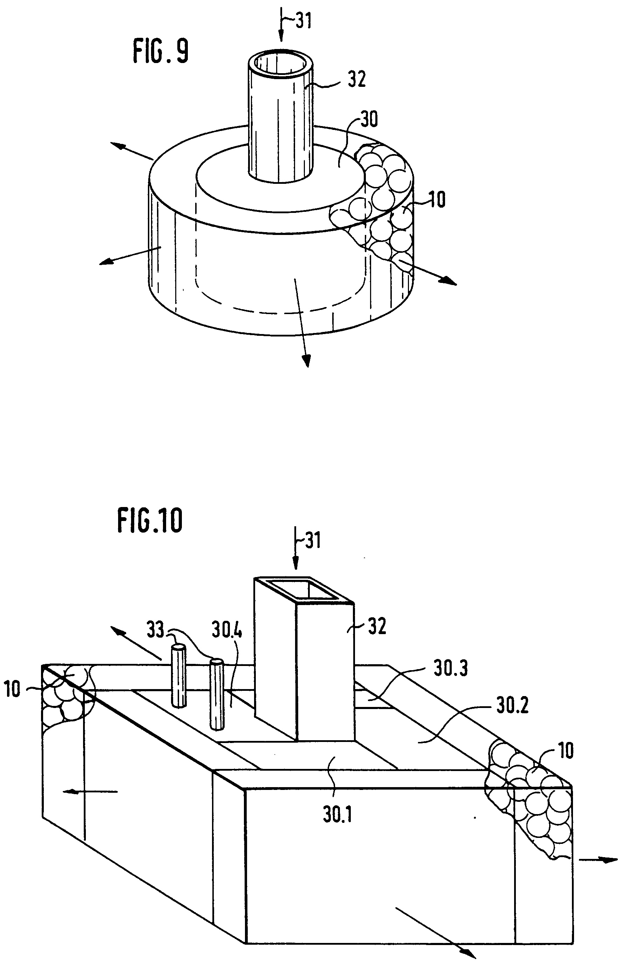

In den Fig. 9 und 10 ist eine Baueinheit aus einem Sorptionsreaktor 10 und einem Wärmetauscher 30 bzw. 30.1, 30.2, 30.3, 30.4 gezeigt, wobei in Strömungsrichtung 31 der Luft der Wärmetauscher dem Sorptionsreaktor vorgeschaltet ist. Eine derartige Baueinheit kann - wie Fig. 9 zeigt - zylindrisch angeordnet sein oder auch nach Art eines Quaders, wie Fig. 10 zeigt. In beiden Fällen ist der zuführende Luftkanal 32 zentral angeordnet, wodurch die Baueinheiten von innen nach außen durchströmt werden. Mit einem derartigen Aufbau ist eine adiabatische Adsorption bzw. eine adiabatische Desorption realisierbar; die Anschlüsse 33 der Primärseite sind bevorzugt mit dem Kühlkreislauf des Verbrennungsmotors verbunden.

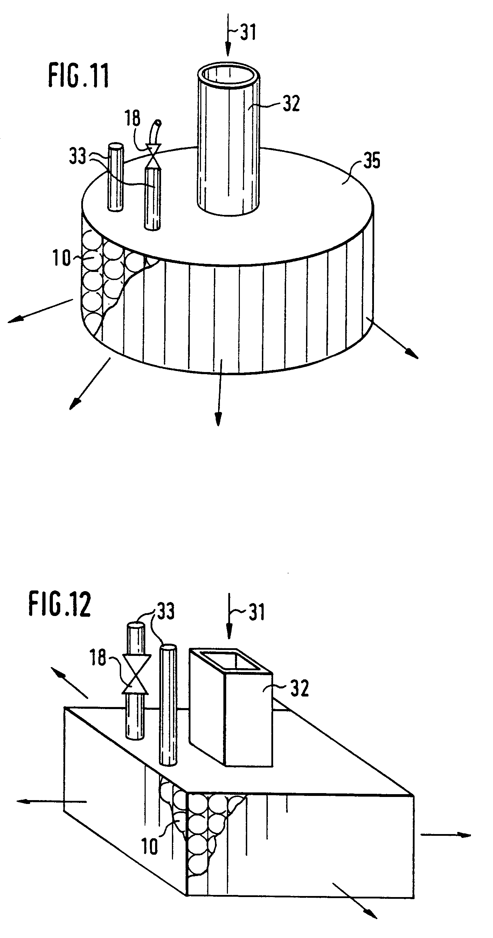

In den Ausführungsbeispielen nach den Fig. 11 und 12 sind Sorptionsreaktoren 10 mit in dem Sorbens gelagerter Heizeinrichtung 13' (Darstellung in Fig. 5) gezeigt. Das Sorbens ist bei einem zylindrischen Körper gemäß Fig. 11 in einem ringförmigen Grundgehäuse mit der nicht näher dargestellten Heizvorrichtung aufgenommen, der über Anschlußleitungen 33 ein Wärmeträger zuführbar ist. Die Luft wird - wie schon zu den Fig. 9 und 10 erläutert - im Zentrum des ringförmigen Grundgehäuses 35 in Strömungsrichtung 31 zugeführt und tritt radial aus. In der Zuleitung zur Heizvorrichtung ist bevorzugt ein Ventil 18 angeordnet.

Der quaderförmig ausgeführte Sorptionsreaktor nach Fig. 12 ist vom Prinzip gleich aufgebaut wie der nach Fig. 11, wobei wieder ein zentraler Luftkanal die Luft in Strömungsrichtung 31 zuführt. Die Luft wird im Sorptionsreaktor 10 um 90° umgelenkt und tritt senkrecht zu den Seitenwänden des Sorptionsreaktors 10 aus. Die Anschlußleitungen 33 für das Wärmeträgermedium weisen ein Ventil 18 zum Ein- bzw. Ausschalten der Heizvorrichtung auf.

Wird bei den Ausführungsbeispielen nach den Fig. 11 und 12 die Heizvorrichtung von dem noch kalten Wärmeträgermedium durchströmt, so wird in der Startphase des Verbrennungsmotors die in der zugeführten Umluft enthaltene Feuchtigkeit isotherm adsorbiert, da die freiwerdende Wärme über das Wärmeträgermedium abgeführt wird. Sobald die Abwärme des Verbrennungsmotors das Wärmeträgermedium weiter aufheizt, wird das Sorbens im Sorptionsreaktor 10 aufgeheizt und isotherm desorbiert. Dabei geht der Adsorptionsvorgang übergangslos in einen Desorptionsvorgang über, ohne daß eine Umsteuerung der Luft oder des Wärmeträgermediums erfolgen müßte. Ist bei einsetzender Heizleistung eine weitere Adsorption gewünscht, wird das Ventil 18 geschlossen, so daß eine adiabatische Adsorption bis zur Erschöpfung des Sorbens möglich ist.

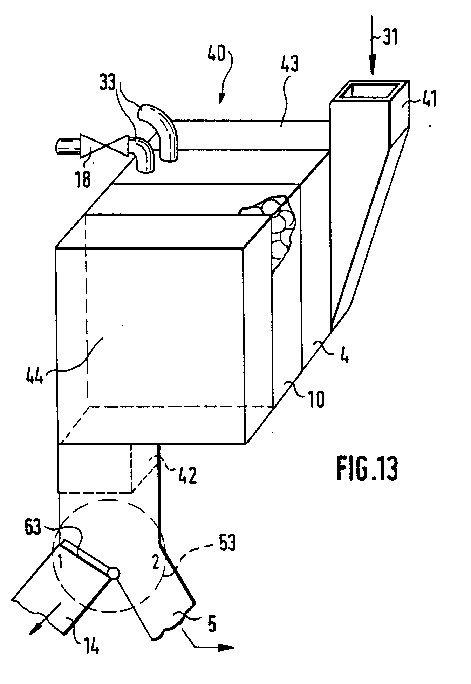

Im Ausführungsbeispiel nach Fig. 13 ist ein Luftführungsgehäuse 40 gezeigt, welches einen Anschlußstutzen 41 für die zuzuführende Luft und einen Anschlußstutzen 42 für die abzuführende Luft zeigt. Der Anschlußstutzen 42 steht über ein Luftstromsteuerelement 53 mit einem Luftführungskanal in Verbindung (vgl. hierzu auch Darstellung in Fig. 8). In der Stellung 1 des Luftstromsteuerelementes 53 wird der Luftstrom dem Zuluftkanal 5 zum Fahrgastraum 1 zugeführt; in Stellung 2 der Steuerklappe 63 wird die Luft über den Luftstutzen 14 abgeführt.

Das Luftführungsgehäuse besteht im wesentlichen aus einer Luftzufuhrkammer 43, einem vorzugsweise von der Abwärme des Verbrennungsmotors gespeisten Wärmetauscher 4, einem Sorptionsreaktor 10 und einer Luftabfuhrkammer 44. Die Luftzufuhrkammer 43 und die Luftabfuhrkammer 44 haben ebenso wie der Sorptionsreaktor 10 und der Wärmetauscher 4 gleiche Größe und bilden ein gemeinsames, etwa quaderförmiges Luftführungsgehäuse 40. Über Anschlußleitungen 33 ist dem Wärmetauscher 4 primärseitig ein Wärmeträgermedium, z. B. das Kühlwasser oder das Abgas des Verbrennungsmotors zuführbar. Zweckmäßig ist in der Zuleitung zum Wärmetauscher 4 ein Ventil 18 angeordnet, so wie dies in den Fig. 4 und 5 beschrieben ist. Mit dem in Fig. 13 gezeigten Luftführungsgehäuse 40 ist eine adiabatische Adsorption bzw. eine adiabatische Desorption möglich.

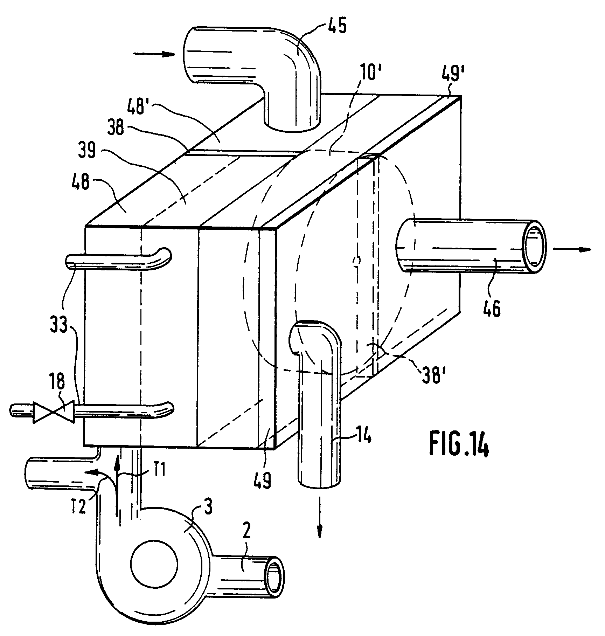

Das Luftführungsgehäuse nach Fig. 14 weist einen Sorptionsreaktor mit integrierter Heizeinrichtung auf, welche im gezeigten Ausführungsbeispiel aus einem vom Wärmeträgermedium durchströmten Wärmetauscher 39 gebildet ist, dessen Anschlußleitungen 33 nach außen ragen. Auf der Anströmseite des rotierenden Sorptionsreaktors 10' sind zwei Luftzufuhrkammern 48 und 48' ausgebildet, zwischen denen eine Trennwand 38 verläuft. In der Luftzufuhrkammer 48, welche mit der Druckseite des Gebläses 3 verbunden ist, befindet sich der Wärmetauscher 39. In Strömungsrichtung hinter den Luftzufuhrkammern befindet sich der Sorptionsreaktor 10', an den sich Luftaustrittskammern 49 und 49' anschließen, die mittels einer Wand 38' voneinander getrennt sind. Über das Gebläse 3 wird durch den Abluftkanal 2 aus dem Fahrgastraum 1 Luft abgezogen und ein erster Teilstrom T1 der Luftzufuhrkammer 48 zugeführt. Der zweite Teilstrom T2 wird dem in die Kammer 48' mündenden Eintrittsstutzen 45 und somit dem Sorptionsreaktor 10' zugeführt, um dann über den an die Luftaustrittskammer 49' angeschlossenen Austrittsstutzen 46 abzuströmen. Der Desorptionsluftstrom wird aus der Luftaustrittskammer 49 über den Fortluftstutzen 14 abgeführt. Der mit der Heizeinrichtung ausgestattete Desorptionsreaktor ermöglicht eine adiabatische Adsorption bzw. eine adiabatische Desorption. Die Heizvorrichtung ist mit einem Ventil 18 abschaltbar ausgebildet.

## Patentansprüche

1. Vorrichtung zum Heizen eines Fahrgastraums in einem Kraftfahrzeug, bestehend aus einer Heizvorrichtung zum Aufwärmen eines dem Fahrgastraum (1) zugeführten Luftstroms und einem Sorptionsreaktor (10) mit einem Sorbens wie Zeolith oder dgl., welcher von zumindest einem Teil des Luftstroms durchströmt ist,
dadurch gekennzeichnet, daß die Speicherfähigkeit der im Sorptionsreaktor (10) aufgenommenen Sorbensmasse an die Aufwärmzeit des Wärmetauschers (4) angepaßt gewählt ist, derart, daß bis zum Erreichen einer vorgebbaren Luftaustrittstemperatur an der Heizvorrichtung (4) der den Sorptionsreaktor (10) durchströmende, unmittelbar dem Fahrgastraum (1) zugeführte Luftstrom in einem ununterbrochenen Adsorptionsvorgang zu trocknen ist.

2. Vorrichtung nach Anspruch 1,
dadurch gekennzeichnet, daß die Heizvorrichtung aus einem von der Abwärme eines Fahrzeugantriebes gespeisten Wärmetauscher (4) gebildet ist.

3. Vorrichtung nach Anspruch 1 oder 2,
dadurch gekennzeichnet, daß der Sorptionsreaktor (10), Luftführungskanäle (8, 11, 12) und Lufstromsteuerelemente (52, 53) eine an eine Fahrzeugheizung bzw. eine Fahrzeugklimaanlage anbaubare Trocknungseinheit (20) bilden.

4. Vorrichtung nach Anspruch 3,
dadurch gekennzeichnet, daß - auf den Desorptionsluftstrom bezogen - der Sorptionsreaktor (10) stromab einer Desorptionsheizung (13) angeordnet ist, wobei die Desorptionsheizung (13) vorzugsweise der den Luftstrom aufwärmende Wärmetauscher (4) der Fahrzeugheizung ist.

5. Vorrichtung nach einem der Ansprüche 1 bis 4,
dadurch gekennzeichnet, daß die Strömungsrichtung von Desorptionsluftstrom und Adsorptionsluftstrom gleich ist.

6. Vorrichtung nach einem der Ansprüche 1 bis 5,
dadurch gekennzeichnet, daß im Sorptionsreaktor (10) eine im Sorbens eingebettete Heizvorrichtung (13) angeordnet ist.

7. Vorrichtung nach einem der Ansprüche 1 bis 6,
dadurch gekennzeichnet, daß die Desorptionsheizung (13, 13') und der Sorptionsreaktor (10) eine bevorzugt in einem Luftführungsgehäuse (40) angeordnete Baueinheit bilden.

8. Verfahren zum Heizen eines Fahrgastraums in einem Kraftfahrzeug, wobei dem Fahrgastraum (1) über eine Heizvorrichtung (4) ein Luftstrom zugeführt wird,
dadurch gekennzeichnet, daß bei Inbetriebnahme der Heizvorrichtung (4) im wesentlichen der gesamte Luftstrom vor Eintritt in den Fahrgastraum (1) als Adsorptionsluftstrom durch einen Sorptionsreaktor (10) mit einem Sorbens wie Zeolith oder dgl. geführt wird, und daß mit zunehmender Heizleistung der Heizvorrichtung (4) der durch den Sorptionsreaktor (10) geführte Adsorptionsluftstrom reduziert wird, wobei die Heizvorrichtung vorzugsweise von der Abwärme eines Fahrzeugantriebs gespeist wird.

9. Verfahren nach Anspruch 8,
dadurch gekennzeichnet, daß der Adsorptionsluftstrom mit zunehmender Heizleistung der Heizvorrichtung in einen Desorptionsluftstrom übergeht.

10. Verfahren nach Anspruch 8 oder 9,
dadurch gekennzeichnet, daß der Desorptionsluftstrom zumindest teilweise dem Fahrgastraum zugeführt ist.

## Claims

1. A device for heating a passenger compartment in a motor vehicle, consisting of a heating device for warming up a stream of air fed to the passenger compartment (1) and a sorption reactor (10) with a sorbent material such as zeolith or the like, through which flows at least a part of the air stream, characterised in that the storage capacity of the sorbent mass accommodated in the sorption reactor (10) is chosen so that it is adapted to the heating up time of the heat exchanger (4), so that until a predeterminable air outlet temperature is reached at the heating device (4) the air stream flowing through the sorption reactor (10) and fed directly to the passenger compartment (1) is dried in an uninterrupted adsorption process.

2. A device according to Claim 1, characterised in that the heating device consists of a heat exchanger (4) fed by the waste heat from a vehicle drive.

3. A device according to Claim 1 or 2, characterised in that the sorption reactor (10), air guide passages (8, 11, 12) and air stream control elements (52, 53) form a drying unit (20) adapted to be fitted to a vehicle heater or vehicle air conditioning system.

4. A device according to Claim 3, characterised in that in relation to the desorption air stream, the sorption reactor (10) is disposed downstream of a desorption heater (13), the desorption heater (13) preferably being the heat exchanger (4) of the vehicle heater which heats up the air stream.

5. A device according to one of Claims 1 to 4 characterised in that the direction of flow of desorption air stream and adsorption air stream is the same.

6. A device according to one of Claims 1 to 5, characterised in that a heating device (13) embedded in the sorbent material in disposed in the sorption reactor (10).

7. A device according to one of Claims 1 to 6, characterised in that the desorption heater (13, 13') and the sorption reactor (10) form one structural unit preferably disposed in an air guide housing (40).

8. A method of heating a passenger compartment in a motor vehicle, whereby a stream of air is fed to the passenger compartment (1) via a heating device (4), characterised in that when the heating device (4) is set in operation, substantially the entire air stream, before it enters the passenger compartment (1), is guided as an adsorption air stream through a sorption reactor (10) with a sorbent material such as zeolith or the like and in that with increasing heat output from the heating device (4) the adsorption air stream passed through the sorption reactor (10) is reduced, the heating device preferably being fed by the waste heat from a vehicle drive.

9. A method according to Claim 8, characterised in that with increasing heat output from the heating device, the adsorption air stream merges into a desorption air stream.

10. A method according to Claim 8 or 9, characterised in that the desorption air stream is at least partially fed to the passenger compartment.

## Revendications

1. Dispositif pour chauffer un habitacle d'un véhicule automobile, comprenant :
- un dispositif de chauffage pour chauffer un flux d'air introduit dans l'habitacle (1), et
- un réacteur (10) à sorption avec un sorbant tel que de la zéolite ou un sorbant analogue, lequel réacteur est traversé au moins par une partie du flux d'air,
**caractérisé en ce que** la capacité de stockage de la masse de sorbant absorbée dans le réacteur (10) à sorption est sélectionnée de façon adaptée au temps de chauffage de l'échangeur de chaleur (4), de manière telle, que jusqu'à ce que l'on atteigne une température de sortie d'air pouvant être prédéterminée au niveau du dispositif (4) de chauffage, le flux d'air introduit immédiatement dans l'habitacle (1) du véhicule, traversant le réacteur (10) à sorption, doit être séché dans un processus d'adsorption ininterrompu.

2. Dispositif selon la revendication 1,
**caractérisé en ce que** le dispositif de chauffage est constitué d'un échangeur de chaleur (4) alimenté par la chaleur perdue de la propulsion d'un véhicule automobile.

3. Dispositif selon la revendication 1 ou 2,
**caractérisé en ce que** le réacteur (10) à sorption, les conduites (8, 11, 12) de ventilation et les éléments de commande (52, 53) de flux d'air constituent un ensemble (20) de séchage pouvant être monté sur un système de chauffage d'un véhicule ou d'un système de climatisation d'un véhicule.

4. Dispositif selon la revendication 3,
**caractérisé en ce que** - concernant le flux d'air de désorption - le réacteur (10) à sorption est disposé en aval d'un dispositif de chauffage (13) par désorption, où le dispositif de chauffage (13) par désorption est, de préférence, l'échangeur de chaleur (4) du chauffage du véhicule chauffant le flux d'air.

5. Dispositif selon l'une quelconque des revendications 1 à 4,
**caractérisé en ce que** la direction d'écoulement du flux d'air de désorption et du flux d'air d'adsorption est la même.

6. Dispositif selon l'une quelconque des revendications 1 à 5,
**caractérisé en ce que**, dans le réacteur (10) à sorption, un dispositif de chauffage (13) est disposé en étant logé dans le sorbant.

7. Dispositif selon l'une quelconque des revendications 1 à 6,
**caractérisé en ce que** le dispositif de chauffage (13, 13') par désorption et le réacteur (10) à sorption constituent un élément disposé, de préférence, dans un carter (40) de déflection d'air.

8. Procédé pour chauffer un habitacle d'un véhicule automobile, où un flux d'air est introduit dans l'habitacle (1), via un dispositif de chauffage (4),
**caractérisé en ce que**, lors de la mise en marche du dispositif (4) de chauffage, essentiellement la totalité du flux d'air, avant d'entrer dans l'habitacle (1) en tant que flux d'air d'adsorption, est acheminé par un réacteur (10) à sorption avec un sorbant tel que de la zéolite ou un sorbant analogue, et
**en ce que**, avec une puissance calorifique croissante du dispositif (4) de chauffage, le flux d'air d'adsorption acheminé par le réacteur (10) à sorption est diminué, auquel cas le dispositif de chauffage est alimenté, de préférence, par la chaleur perdue de la propulsion d'un véhicule automobile.

9. Procédé selon la revendication 8,
**caractérisé en ce que** le flux d'air d'adsorption, lorsque la puissance calorifique du dispositif de chauffage augmente, se transforme en un flux d'air de désorption.

10. Procédé selon la revendication 8 ou 9,
**caractérisé en ce que** le flux d'air de désorption est introduit au moins partiellement dans l'habitacle du véhicule.
